# EUROPEAN PATENT APPLICATION

(11) **EP 1 872 926 A2**
(43) Date of publication of application: **02.01.2008**
(21) Application number: 07108549.2
(22) Date of filing: 21.05.2007
(51) Int. Cl.: B29C 45/76, B29C 45/40

(54) **Ejector control device for injection molding machine**

(30) Priority: 30.06.2006 JP 2006182328
(71) Applicant: Fanuc Ltd, Minamitsuru-gun, Yamanashi 401-0597 (JP)
(72) Inventor: Saito, Osamu, 3515-1, Shibokusa, Minamitsuru-gun Shizuoka 401-0511 (JP); Watanabe, Hiroshi, Fujiyoshida-shi Yamanashi 403-0004 (JP); Uchiyama, Tatsuhiro, Gotenba-shi Shizuoka 412-0026 (JP)
(74) Representative: Billington, Lawrence Emlyn

(57) **Abstract**

An ejector control device (20) for an injection molding machine performs a series of processes that move ejector pins (9) forward and backward a plurality of times to remove a molded article from a mold. Each process has various elements, such as a starting condition, a delay time from satisfaction of the starting condition to actual start of the operation, a target position, and a movement speed with which the ejector pins (20) advance (or retract) to the target position from the position reached in the previous process. Data are set to specify the elements of each process and the execution order of the processes.

## Description

### BACKGROUND OF THE INVENTION

### 1. Field of the Invention

The present invention relates to an ejector control device for an injection molding machine, and in particular to an ejector control device facilitating the setting of ejector operation patterns.

### 2. Description of the Related Art

In many injection molding machines, an ejector is operated to release the molded article from the mold by pushing ejector pins into the opened mold. Since the molded article sticks to the mold, a single actuation of the ejector pins may not be enough to release the molded article from the mold, so the ejector pins are usually actuated multiple times. Many ejector operation patterns have been developed and established to reliably remove molded articles of different materials, shapes, and other characteristics. The following are some of the known types of patterns.

One type of pattern is set using four timers that control the operation of the ejector pins (see Japanese Patent Application Laid-Open No. 61-195817) . The ejector pins advance for a time set in the first timer, pause for a time set in the second timer, advance for a time set in the third timer, and are retracted for a time set in the fourth timer. This patent document also discloses a similar type of pattern using position sensors, instead of the first, third, and fourth timers, to detect the position of the ejector pins and move them in a similar manner.

Another type of pattern relies on timers or positions to control the ejector pins for releasing a molded article from a mold by setting their advancing and retracting velocities and operating times or positions (see Japanese Patent Application Laid-Open No.62-197261).

Another type of pattern causes the ejector pins to move forward to a first predetermined position at a low speed, then retract at a high speed in the first ejecting action, and to move forward to a second predetermined position at a high speed and retract at a high speed in the second and following ejecting actions (see Japanese Patent Application Laid-Open No.1-308613).

Another type of pattern sets first and second ejection limits and a return stroke distance. In the first ejecting action, the ejector pins are moved forward to the first ejection limit and backward over the return stroke distance. In the second and following ejecting actions, the ejector pins are moved forward to the second ejection limit and then moved backward over the return stroke distance (see Japanese Patent Application Laid-Open No. 4-305423) . Yet another type of pattern sets a first projection completion position, a second projection limit, and a return limit. The ejector pins are moved forward to the first projection completion position in the first ejecting action, and reciprocate between the return limit and the second projection limit in the second and following ejecting actions (see Japanese Patent Application Laid-Open No.8-118436).

It has also been known to set and store a plurality of ejector operation patterns in advance and select and execute a specific pattern (see Japanese Patent Application Laid-Open No.5-162177).

Although not directly related to an ejector operation pattern, an injection molding cycle configuration including mold closing, injection, hold-pressure, cooling, metering, mold opening, and ejecting can be set to control an injection molding machine (see Japanese Patent Application Laid-Open No.6-210694).

To release a molded article from a mold reliably without damaging it, an optimal ejector operation pattern should be set according to the shape of the molded article (or the shape of a molded article), and the material and other characteristics of the molded article. Accordingly, various ejector operation patterns have been proposed as described above.

It takes time, however, to create an operation pattern (ejector position and movement speed) for each ejection task according to the shape, material, and other characteristics of the molded article. It is easier to select the ejector operation pattern from a set of pre-stored patterns as described in Japanese Patent Application Laid-Open No.5-162177, but when the set of pre-stored patterns does not include the optimal ejector operation pattern, a new operation pattern has to be added to a sequence program for an injection molding machine, which results in a time-consuming job.

### SUMMARY OF THE INVENTION

It is an object of the present invention to provide an ejector control device that facilitates the setting of ejector operation patterns.

The ejector control device for an injection molding machine according to the present invention comprises:
process setting means for setting ejector motion processes by specifying, for each process, a target position to be reached and a movement speed toward the target position; process order setting means for setting an execution order of each of the ejector motion processes set by the process setting means; and process execution means for executing the ejector motion processes according to the execution order which was set by the process order setting means.

The process order setting means may set an execution order of each of the ejector motion processes according to the order in which the ejector motion processes are set by the process setting means.

The process order setting means has a display device for displaying the ejector motion processes set by the process setting means in an ordered arrangement, and sets the execution order of each of the processes according to the order in which the processes are displayed on the display device.

The process order setting means comprises means for assigning, to each of the processes set by the process setting means, corresponding index representative of the order of its execution, thereby setting the execution order of each of the processes according to the assigned index.

The ejector control device may further comprise display means for displaying ejector operations to be executed by the process execution means in a graph showing a relationship between elapsed time and ejector position.

The process setting means may allow setting of an operation starting condition for starting the operation in each process and a delay time for delaying the start of operation in each process, in addition to the target position and the speed of motion toward the target position. In each process, the process execution means starts moving the ejector when the delay time set for the process has elapsed after the operation starting condition set for the process is satisfied, or after the preceding process is completed if no starting condition is set.

According to the present invention, an ejector operation pattern is divided into a series of separately specifiable processes, so the ejector operation pattern can be set simply by specifying, modifying, or correcting its individual processes. An existing ejector operation pattern can easily be modified to suit the shape and material of the molded article, without changing a sequence program of an injection molding machine.

### BRIEF DESCRIPTION OF THE DRAWINGS

The above and other objectives and features of the present invention will become apparent from the following description of preferred embodiments thereof with reference to the accompanying drawings, in which:
FIG. 1 is a block diagram of an injection molding machine controller constituting an ejector control device according to the invention.
FIG. 2 illustrates a first example of an ejector operation pattern setting screen applicable to the ejector control device of the present invention.
FIG. 3 is a flowchart illustrating an ejector operation processing algorithm executed by the controller (CNC CPU) of FIG. 1 according to the ejector operation pattern shown in FIG. 2.
FIG. 4 shows a relationship between elapsed time and ejector position when the ejector operates according to the ejector operation pattern in FIG. 2.
FIG. 5 illustrates a second example of an ejector operation pattern setting screen applicable to the ejector control device of the present invention.
FIG. 6 is a flowchart illustrating an ejector operation processing algorithm executed by the controller (CNC CPU) of FIG. 1 according to the ejector operation pattern shown in FIG. 5.

### DETAILED DESCRIPTION OF THE PREFERRED EMBODIMENTS

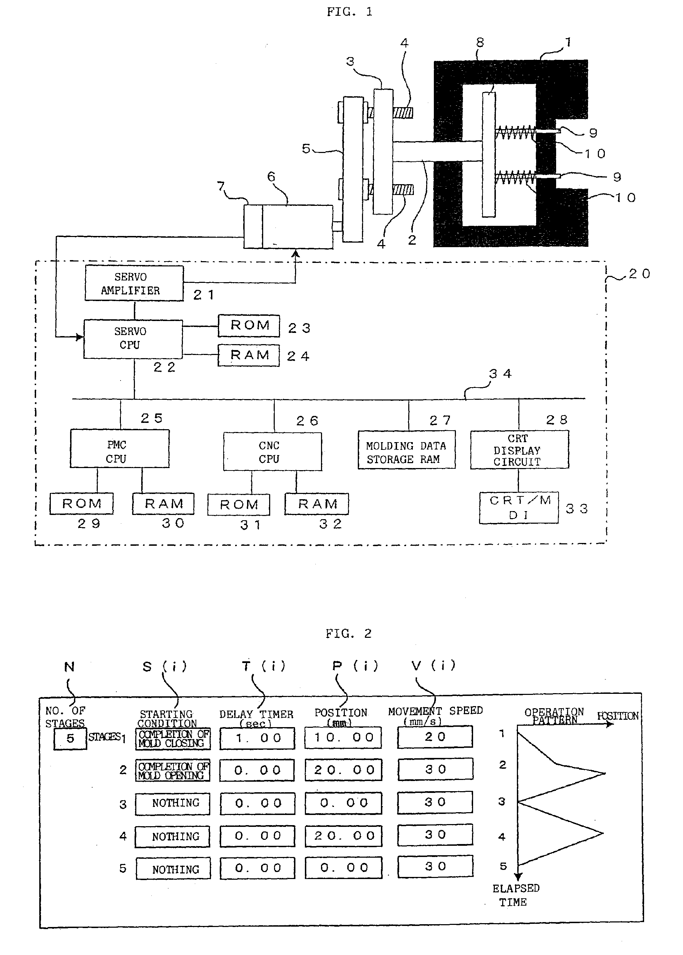

FIG. 1 is a block diagram of an injection molding machine controller 20 which also serves as an ejector control device according to the invention.

The ejector is mounted on a movable platen (not shown) to which a movable mold 1 is attached. The ejector comprises a pusher plate 3 with an ejector rod 2 attached thereto, ball screws 4 in threaded engagement with ball nuts provided in the pusher plate 3, and a pulley and belt mechanism 5 linking the ball screws 4 with the output shaft of an ejector servo motor 6. The ejector rod 2 penetrates the movable platen and abuts on an ejector plate 8 provided within a mold 1 in order to push ejector pins 9 provided on the ejector plate 8 into the cavity of the mold 1 against the elastic force of return springs 10, to release a molded article stuck to the mold 1 and remove it from the mold 1.

The controller 20 comprises a servo CPU 22, which is a microprocessor used for servo control, a PMC CPU 25, which is a microprocessor used for programmable machine control (PMC), and a CNC CPU 26, which is a microprocessor used for numerical control. These microprocessors exchange information through a bus 34 by selecting their respective inputs and outputs.

A ROM 29 which stores a sequence program for controlling an operation sequence of the injection molding machine and a RAM 30 which temporarily stores arithmetic operation data are connected to the PMC CPU 25. A ROM 31 which stores an automatic operation program for overall control of the injection molding machine and a RAM 32 which temporarily stores arithmetic operation data are connected to the CNC CPU 26.

A ROM 23 which stores a control program dedicated for servo control, including position loop, velocity loop, and current loop processing, and a RAM 24 which temporarily stores data are connected to the servo CPU 22. Servo amplifiers that drive servo motors for mold clamping, injection, screw rotation, ejector actuation, etc. according to commands from the CPU 22 are connected to the servo CPU 22, although only the servo amplifier 21 for driving the servo motor 6 for the ejector shaft is shown in FIG. 1. A position/velocity detector 7 is mounted on each servo motor 6 and its output is fed back to the servo CPU 22, although only the position/velocity detector 7 mounted on the ejector servo motor 6 and connected to the servo CPU 22 is shown in FIG. 1. The position/velocity detector 7 detects the position of the ejector pins from the rotational position of the servo motor 6.

A manual data input (MDI) device 33 provided with a CRT display, numeric keys, and various function keys is connected through a CRT display circuit 28 to the bus 34. The CRT display provides displays various screens for setting molding condition or the like, which allows various date to be set. The numeric keys are used to enter numeric data. A liquid crystal display or other type of display device may be used instead of a CRT display.

The RAM 27 is a nonvolatile memory for storing molding data such as molding conditions, various setting values, and parameters related to an injection molding job.

In the above configuration, the PMC CPU 25 controls the overall operation sequence of the injection molding machine, while the CNC CPU 26 distributes movement commands to the servo motors associated with the axes according to the operation program stored in the ROM 31 and the molding conditions stored in the data storage RAM 27. The servo CPU 22 performs conventional digital servo processing by performing such servo control functions as position loop control, velocity loop control, and current loop control according to the movement commands distributed to the servo motors of the axes and the position and speed signals fed back from the position/speed detectors 7.

The above configuration is the same as that of a controller of a conventional electrically-operated injection molding machine. The ejector control device of the present invention is constituted by the injection molding machine controller 20 but differs from conventional injection molding machine controllers in that it has a ROM 31 of the CNC CPU 26 in which a software which facilitates setting of ejector operation patterns and a software which executes the ejector operation patterns thus set are stored in advance.

FIG. 2 illustrates a first example of an ejector operation pattern setting screen applicable to the ejector control device of the present invention.

With the operation of the manual data input device 33, an ejector operation pattern setting screen for the input of the number N of ejection processes of the ejector pin in the ejector, starting condition S(i) of the i-th (1≤i≤N) process, delay timer T (i), target position P (i) and movement speed V(i) is displayed on the CRT display, where the index "i" represents the i-th process of N ejection processes, displayed in the i-th row on the setting screen. In the first example of the ejector operation pattern setting screen, the value of index "i" indicates the sequence of stages in which the processes are executed. When N ("5" in FIG. 2), the number of ejection processes of the ejector pin in the ejector, is input, corresponding number of rows of setting fields for setting the starting conditions S(i), delay timers T(i), target positions P(i) and movement speeds V(i) of the individual processes is displayed.

In the first example of the ejector operation pattern setting screen, one ejection process in the ejector operation is composed of a starting condition S (i), delay timer T (i), target position P(i) and movement speed V (i) of the ejector (ejector pin). The ejector operation pattern is set by setting N number of such ejection processes.

In the example shown in FIG. 2, the number N of processes in the ejector operation pattern has been set to "5". For the first-stage process (i=1), the starting condition S(1) is set to "completion of mold closing", the delay timer T (1) is set to 1.00 second, the target position P(1) is set to 10.00 mm, and the movement speed V (1) is set to 20 mm/s. These settings of the first-stage process cause the ejector pins to start moving 1.00 second after mold closing is completed, and to move to the target position (10.00 mm) at a movement speed of 20 mm/s.

For the second-stage process (i = 2), the starting condition S(2) is set to "completion of mold opening", the delay timer T (2) is set to 0.00 seconds, the target position P(2) is set to 20.00 mm, and the movement speed V(2) is set to 30 mm/s. These setting of the second-stage process cause the ejector pins to start moving immediately after mold opening is completed (because the delay timer is set to 0.00), and to move to the 20.00-mm position at a movement speed of 30 mm/s.

For the third-stage process (i = 3), the starting condition S (3) is set to "none", the delay timer T(3) is set to 0.00 seconds, the target position P(3) is set to 0.00 mm, and the movement speed V(3) is set to 30 mm/s. The starting condition "none" means that the ejector pins are caused to start moving when the time specified in the delay timer has elapsed after the operation in the previous stage is completed. Accordingly, the settings of the third-stage process in the example in FIG. 2 cause the ejector pins to retract to the 0. 00-mm position, which is the home position, at a movement speed of 30 mm/s as soon as the second-stage process is completed.

For the fourth-stage process (i = 4), the starting condition S(4) is set to "none", the delay timer T(4) is set to 0.00 second, the target position P(4) is set to 20.00 mm, and the movement speed V (4) is set to 30 mm/s . These settings of the fourth-stage process cause the ejector pins to start moving immediately after the third-stage process is completed, and to move to the 20. 00-mm position at a movement speed of 30 mm/s.

For the fifth-stage process (i = 5), the starting condition S (5) is set to "none", the delay timer T (5) is set to 0.00 seconds, the target position P(5) is set to 0.00 mm, and the movement speed V(5) is set to 30 mm/s. These settings of the fifth-stage process cause the ejector pins to start moving immediately after the fourth-stage process is completed, and to retract to the 0.00-mm position (home position) at a movement speed of 30 mm/s.

When an ejector operation pattern has been set in this manner, the operation pattern is displayed graphically according to the set data in the right-hand portion of the display screen in FIG. 2, with ejector pin position on the horizontal axis and elapsed time on the vertical axis. This displaying in the shape of a graph makes the ejector operation pattern easily understandable, thereby preventing incorrect settings and other errors.

Since the ejector operation pattern can be set process by process, as described above, modification and correction of the ejector operation pattern is significantly facilitated.

In the example shown in FIG. 2, setting fields (for starting condition, delay timer, target position, and movement speed) for operation patterns of individual stages are displayed such that they are arranged according to the execution order of the individual processes. However, it is also possible to display a single row of fields at a time and automatically determine the execution order of the respective processes (the value of "i") according to the order of input. In other words, the order of input (i-th input) determines the order of process (i-th stage process).

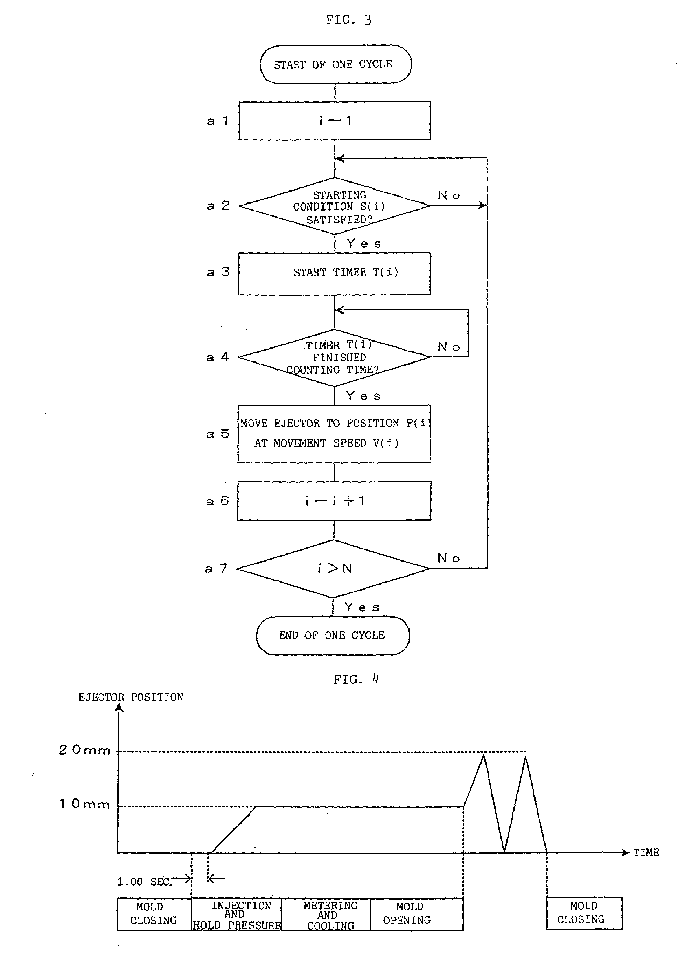

FIG. 3 is a flowchart illustrating an ejector operation processing algorithm executed by the controller (CNC CPU 26) of FIG. 1 according to the ejector operation pattern shown in FIG. 2.

First, the index "i" specifying the process stage of the ejector operation pattern (derived from the row on the screen or the order of input) is set to "1" (Step a1), and it is determined whether the starting condition S (i) for the i-th stage process (i = 1) is satisfied or not. More specifically, it is determined whether the starting condition S(i) (= S(1)) of the first-stage process, which was set in the first row on the ejector operation pattern setting screen (or was input first), is satisfied or not, and if it is not satisfied, the processing waits until the condition is satisfied (Step a2) . When the starting condition is satisfied, a timer T(i) is set to the time specified as the delay timer and is activated (Step a3). The processing waits until the timer T(i) finishes counting the set time (Step a4).

When the timer T(i) finishes counting the set time, a movement command is output to the servo CPU 22 to move the ejector pins to the target position P(i) (= P(1)) at the movement speed V (i) (= V (1)) specified for the i-th process. Based on the specified target position (amount of travel) and the position and velocity fed back from the position/velocity detector 7, the servo CPU 22 performs position and velocity feedback processing and drives the ejector servo motor 6 through the servo amplifier 21 to move to the specified target position P(i) at the specified movement speed V(i) (Step a5).

The index "i" is then incremented by one (Step a6) and it is determined whether or not the index "i" exceeds the specified number of processes N (Step a7). If not, the processing returns to Step a2. The processing from Step a2 to Step a7 is repeated to execute the ejector operation in each stage process in turn until the index "i" exceeds the specified number of processes "N".

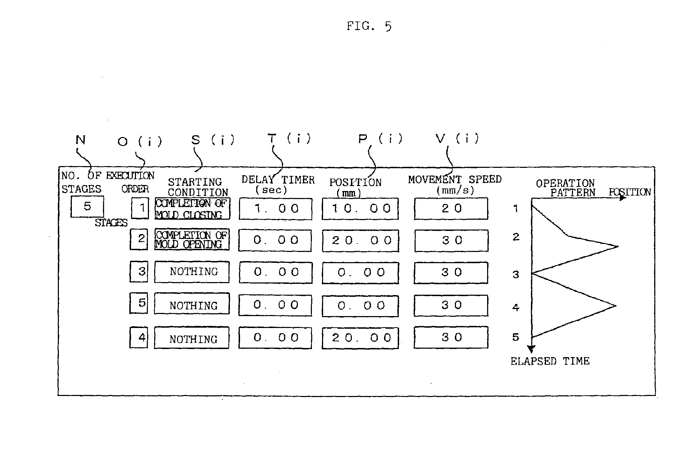

When the ejector operation pattern is set as shown in FIG. 2, the ejector operation develops as follows. FIG. 4 shows the relationship between elapsed time and ejector position when the ejector operates according to the ejector operation pattern shown in FIG. 2.

When the index "i" is set to "1" and the completion of mold closing is confirmed at Step a2, the operation for the first-stage process is initiated. More specifically, the timer is set to 1.00 second and starts counting time (Step a3) . When 1. 00 second elapses and the timer finishes counting (Step a4), the ejector pins are driven to the 10.00-mm position at a movement speed of 20 mm/s (Step a5).

The index "i" is then incremented by one (Step a6). As the resulting index value does not exceed the specified number of processes (5), the processing returns to Step a2. The starting condition for the process at this stage (i = 2) is set to "completion of mold opening," so the operation of the second-stage process does not start immediately after the end of the first-stage process but waits for the mold to be opened. When the completion of mold opening is confirmed, the timer is set to "0" and the ejector pins immediately start moving to the 20.00-mm position at a movement speed of 30 mm/s.

The index "i" is then set to "3". The third-stage process starts immediately after the second-stage process is completed, because the starting condition set for the third-stage process is "none". The ejector pins move to the 0.00-mm position at a movement speed of 30 mm/s. Next, the index "i" is set to "4". The fourth-stage process starts when the third-stage process is completed; the ejector pins move to the 20. 00-mm position at a movement speed of 30 mm/s . After the fourth-stage process is completed, the fifth-stage process starts and the ejector pins move to the 0.00-mm position at a movement speed of 30 mm/s, completing the sequence of operations in the specified ejector operation pattern. The operation sequence is shown in FIG. 4.

FIG. 5 illustrates a second example of an ejector operation pattern setting screen applicable to the ejector control device of the present invention.

This ejector operation pattern setting screen is generally identical to the first example of the pattern setting screen shown in FIG. 2, except for a field 0(i) for setting the execution order (stage) of the processes. As shown in FIG. 5, in operation setting fields (row) for each of the respective processes, a field for setting an execution order is provided. In the example shown in FIG. 5, for the process specified by the first row where "i" representative of row is "1", "execution order" is set to "1", which means the execution order "j" of this process is the first, so that this process is set to the first-stage process in the ejector operation pattern. Similarly, the process specified in the second row is the second-stage process as "execution order" is set to "2" for the process, the process specified in the third row is the third-stage process as "execution order" is set to "3" for the process, the process specified in the fourth row is the fourth-stage process as "execution order" is set to "4" for the process, and the process specified in the fifth row is the fifth-stage process as "execution order" is set to "5" for the process. The ejector operation pattern set in an example of ejector operation pattern setting screen of FIG. 5 is identical to the ejector operation pattern set in the first example of ejector operation pattern setting screen of FIG. 2. Accordingly, the ejector carries out operations shown in FIG. 4.

As the second example of ejector operation pattern setting screen allows the execution order to be specified, the ejector operation pattern can be corrected very easily. For example, a new process can be added between processes of an existing ejector operation pattern by only setting the data (starting condition, delay timer, target position, and movement speed) for the new process to be added and reassigning the execution order.

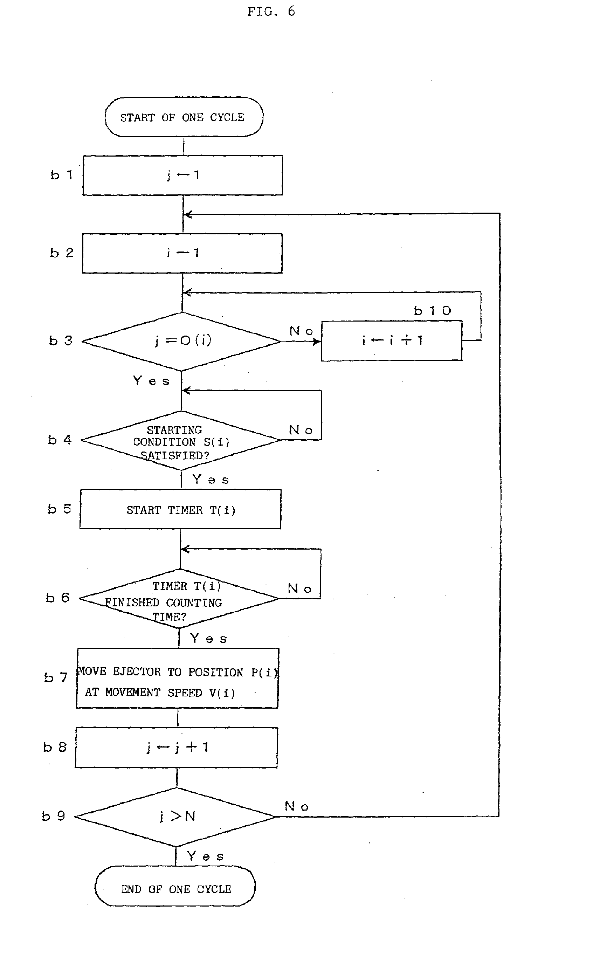

FIG. 6 is a flowchart illustrating an ejector operation processing algorithm executed by the controller (CNC CPU 26) of FIG. 1 according to the ejector operation pattern shown in FIG. 5.

First, the index "j" specifying the execution order of the processes in the ejector operation pattern is set to "1" (Step b1). Then, the index "i" specifying the row of the set process (or specifying the field of "execution order" in respective rows) is set to 1 (Step b2). The order O (i) set in the field of "execution order" in the row specified by index "i" is then read, and it is determined whether the value of order O(i) is identical to the value of index "j" or not (Step b3). If not identical, index "i" is incremented by one (Step b10) and the processing returns to Step b3.

If the value of order 0(i) is identical to the value of index "j", respective data in the row "i" is read as j-th execution data, then the processing proceeds to Step b4. The processing from Step b4 to Step b7 in FIG. 6 is identical to the processing from Step a2 to Step a5 in FIG. 3, which is executed by the controller in FIG. 1 according to the ejector operation pattern in FIG. 2. In the case of the first example of ejector operation pattern setting screen shown in FIG. 2, the index "i", which represents the process execution stage (and row), is incremented by one and it is determined whether or not the index "i" exceeds the specified number of processes "N". In the case of the second example of ejector operation pattern setting screen, however, the index "j" representing the stage of the execution process is incremented by one, and it is determined whether or not the index "j" exceeds the specified number of processes "N", and if it does not, the processing returns to Step b2. Accordingly, in the second example, the processes are executed according to the execution order 0 (i) which was set in the field of "execution order".

When the ejector operation pattern is set as shown in FIG. 5, the ejector operation proceeds according to the flowchart in FIG. 6. The indices "j" and "i" are set to "1" (Steps b1 andb2) . Since the execution order 0(i) = 1 specified in row i (row 1) matches the value of index "j" (j = 1) (Step b3), then it is determined whether the starting condition S(i) = S(1), completion of mold closing, is satisfied or not (Step b4) . If determined that mold closing is completed, the value (= 1.00) set in the field of "delay time" is set to the timer T (i), which starts counting time (Step b5) . When the timer finishes counting 1.00 second (Step b6), the ejector pins are moved to the 10.00-mm target position at a movement speed of 20 mm/s (Step b7). Index "j" is then incremented by one (Step b8) . Since index "j" does not exceed the specified number N =5 of processes, the processing returns to Step b2, where the index "i" specifying the row of the set process is set to "1". It is determined whether or not the value stored in the field of the execution order, 0 (i) = 0 (1), in the i-th row (row 1) is identical to the value of the index "j" (= 2). In this case, since O(1) - 1 while j = 2, the former being not identical to the latter, index "i" is incremented by one to "2" (Step b10). Then, the value specified in the field of execution order O(2) in the second row (i = 2) is read and compared with the index "j". Since O(2) = 2 and index "j" = 2, the former being identical to the latter, the process (for moving the ejector pins, after completion of mold opening, to the 20.00-mm position at a speed of 30mm/s) specified in the second row is performed as the second process by executing the processing from Step b4 to Step b9.

Then, the index "j" is set to "3" at Step b8, the index "i" is incremented one by one until it reaches the row in which the execution order O (i) is set to 3 (Step b3). When the index "i" reaches 3, since j = O(3) = 3, the process (for moving the ejector pins to the 0. 00-mm position at a movement speed of 30 mm/s) specified in the third row is executed as the third process in Steps b4 to b7 (the ejector pins are driven).

Next, the index "j" is set to "4" at Step b8, and since the execution order O(5) = 4 is read when the index "i" reaches '5', the process specified in the fifth row is executed as the fourth process (in which the ejector pins are moved to the 20.00-mm position at a movement speed of 30 mm/s) . Index "j" is then set to "5" at Step b8. This time, when the index "i" reaches "4", the execution order O(4) = 5 is read and the process specified in the fourth row is executed as the fifth process (in which the ejector pins are driven to the 0.00-mm position at a movement speed of 30 mm/s).

Finally, the index "j" is incremented by one to "6" at Step b8 and it is determined that it exceeds the specified number N of processes at Step b9, so the ejector operation processing finishes.

The ejector pins are accordingly moved as shown in FIG. 4, because the relationship between elapsed time and ejector position (or the mode of operation of the ejector) defined by the ejector operation pattern shown in FIG. 5 is the same as that defined by the ejector operation pattern shown in FIG. 2.

In the examples of ejector operation pattern settings described above, each process is composed of its starting condition, delay timer, target position, and movement speed. When the ejector operation patterns are such that respective processes are successively executed, however, it is not necessary to specify a starting condition for each process. In the case where completion of mold opening is specified as the condition for starting the ejector operation (the first-stage process), it is sufficient to start the ejector operation when mold opening is completed and to successively carry out respective processes (specified by its delay timer, target position, and movement speed) from the first process.

The delay timer settings may also be omitted. The delay timer is provided to allow the ejector pins to pause between processes. If it is not necessary to let the ejector pins pause between processes, the delay timer may be set to "0" or the delay timer setting itself may be removed from the relevant processes. In other words, since essential elements for setting ejector operation are target position and movement speed, it is possible to execute respective processes successively by defining each process with only the target position and movement speed.

## Claims

1. An ejector control device for an injection molding machine, comprising:
process setting means for setting ejector motion processes by specifying, for each process, a target position to be reached and a movement speed toward the target position;
process order setting means for setting an execution order of each of the ejector motion processes set by said process setting means; and
process execution means for executing the ejector motion processes according to the execution order which was set by said process order setting means.

2. The ejector control device for an injection molding machine according to claim 1, wherein said process order setting means sets an execution order of each of the ejector motion processes according to the order in which the ejector motion processes are set by said process setting means.

3. The ejector control device for an injection molding machine according to claim 1, wherein said process order setting means has a display device for displaying the ejector motion processes set by said process setting means in an ordered arrangement, and sets the execution order of each of the processes according to the order in which the processes are displayed on the display device.

4. The ejector control device for an injection molding machine according to claim 1, wherein said process order setting means comprises means for assigning, to each of the processes set by said process setting means, corresponding index representative of the order of its execution, thereby setting the execution order of each of the processes according to the assigned index.

5. The ejector control device for an injection molding machine according to claim 1, further comprising display means for displaying ejector operations to be executed by said process execution means in a graph showing a relationship between elapsed time and ejector position.

6. The ejector control device for an injection molding machine according to claim 1, wherein said process setting means further enables an operation starting condition to be set for each process, and in each process, said process execution means causes the ejector to start moving when the operation starting condition set for the process is satisfied.

7. The ejector control device for an injection molding machine according to claim 1, wherein said process setting means further enables a delay time to be set for each process, and in each process, said process execution means causes the ejector to start moving when the delay time set for the process has elapsed after the completion of a previous process.

8. The ejector control device for an injection molding machine according to claim 1, wherein said process setting means enables an operation starting condition and a delay time for delaying the start of the operation of a subsequent process to be set for each process, in addition to the target position and movement speed of the ejector toward the target position, and wherein
said process execution means causes, in each process, the ejector to start moving when the operation starting condition is satisfied and further the delay time set for the preceding process has elapsed.

9. The ejector control device for an injection molding machine according to claim 1, wherein said ejector control device is constituted by a controller of the injection molding machine, and the controller includes a servo motor for moving ejector pins of the ejector and an ejector pin position detector for detecting a rotational position of the servo motor.
